# EUROPEAN PATENT APPLICATION

(11) **EP 3 045 902 A1**
(43) Date of publication of application: **20.07.2016**
(21) Application number: 15150955.1
(22) Date of filing: 13.01.2015
(51) Int. Cl.: G01N 27/414

(54) **Electrolyte-gated sensor for species detection**

(71) Applicant: Technische Universität München, 80333 München (DE)
(72) Inventor: Lugli, Paolo, 85933 Hallbergmoos (DE); Bhatt, Vijay Deep, 81547 München (DE); Melzer, Katharina, 82272 Moorenweis (DE)
(74) Representative: Lucke, Andreas

(57) **Abstract**

Provided is a electrolyte-gated sensor for detecting chemical and/or biological species comprising a substrate, a source electrode formed on the substrate, a drain electrode formed on the substrate, a gate electrode formed on the substrate, and an active layer, the active layer connecting the source electrode and the drain electrode, wherein an electrical resistance of the active layer varies with a concentration of one or more chemical and/or biological species in a fluid when the fluid covers the active layer.

## Description

### FIELD OF THE INVENTION

The present invention relates to electrolyte-gated sensors for species detection. In particular, the present invention relates to electrolyte-gated transistors and electrolyte-gated arrays for detecting a concentration of chemical and/or biological species in a fluid.

### BACKGROUND

Electrolyte-gated transistors for sensing various chemical and/or biological species in a fluid are known from the prior art. However, design and set-up of known electrolyte-gated transistors for sensing chemical and/or biological species in a fluid is complex as it requires immersing a gate electrode into the fluid at a position above the active layer between the source and drain electrodes.

Furthermore, known sensor arrays for sensing various chemical and/or biological species in a fluid only allow a detection of species of the same analyte category which means that sensor arrays that are able to detect ions are incapable of detecting biomolecules at the same time. Additionally, the sensor arrays known from the prior art are still based on CMOS technology. Thus, known arrays are fabricated on a non-flexible substrate and the fabrication process demands a high fabrication cost and additionally sophisticated lab facilities. Moreover, a large area fabrication process cannot be realized in an economic feasible way.

### SUMMARY OF THE INVENTION

The invention has been made for providing electrolyte-gated sensors and methods of measuring concentrations of multiple species enabling precise detection of chemical and/or biological species while having a simple design that promotes cost-effective mass production.

This is achieved by electrolyte-gated sensors and methods of measuring concentrations of multiple species according to the present invention as defined by the independent claims.

The electrolyte-gated sensor for detecting chemical and/or biological species according to the present invention comprises a substrate, a first source electrode formed on the substrate, a first drain electrode formed on the substrate, and a first active layer, the first active layer connecting the first source electrode and the first drain electrode, wherein an electrical resistance of the first active layer varies with an electrostatic potential of a fluid when the fluid covers the first active layer during operation.

The electrolyte-gated sensor for detecting chemical and/or biological species according to the present invention further comprises a second source electrode formed on the substrate, a second drain electrode formed on the substrate, and a second active layer, the second active layer connecting the second source electrode and the second drain electrode, wherein an electrical resistance of the second active layer varies with an electrostatic potential of the fluid when the fluid covers the second active layer during operation.

The electrolyte-gated sensor for detecting chemical and/or biological species according to the present invention further comprises a gate electrode formed on the substrate, wherein the first source electrode, the first drain electrode, the first active layer, and the gate electrode form a first electrolyte-gated transistor and the second source electrode, the second drain electrode, the second active layer and the gate electrode form a second electrolyte-gated transistor.

As used throughout the description and claims, the wording "detecting chemical and/or biological species" particularly refers to detecting the presence of chemical and/or biological species and preferably refers to measuring a concentration of chemical and/or biological species, the chemical and/or biological species like ions, proteins, DNA, enzymes, glucose, oxygen, chemical and/or biological compounds, organic compounds (e.g. urea), metal ions, neurotransmitters, hormones, cofactors, acids, etc.

Furthermore, the formulation "formed on the substrate" as used throughout the description and claims is to be understood in a broad sense and particularly encompasses cases where the electrode is deposited on a (planar) surface of the substrate as well as cases where the electrode is deposited in a trench in the (planar) surface of the substrate as well as cases where a part of the substrate is modified to become electrically conductive, for example by doping a part of the substrate with a conductive material. In addition, also cases shall be covered where the electrode is formed on a layer or a layer stack deposited on the substrate.

Moreover, the wording "covers the active layer" as used throughout the description and claims is intended to encompass the case where an active layer comprises a porous, polymerized or random nanomaterial network material and the fluid either permeates the whole active layer or at least a part of the active layer. Furthermore, the term "fluid" as used throughout the description and claims particularly refers to an electrolytic solution, e.g., an aqueous electrolytic solution but may also refer to gas.

By forming all components of the first electrolyte-gated transistor and the second electrolyte-gated transistor on one substrate, e.g., on a (planar) surface of one substrate, the present invention takes benefit of the fact that the gate electrode needs not to be positioned above the active layer of an electrolyte-gated transistor but may be positioned at a certain distance from the active layer, because the fluid acts like a dielectric propagating the gate voltage to the active layer.

Furthermore, arranging all electrolyte-gated transistor components on the same substrate allows using standard photolithography technique together with a lift-off process or novel techniques like nanotransfer printing or solution-based printing technologies in the fabrication process and thus promotes a cost-effective fabrication process.

For example, the active layer may be deposited using solution-based deposition techniques, e.g., via spin-coating or spray-coating an (aqueous) solution of the active layer material on top of the source electrode, the drain electrode and a substrate region between the source electrode and the drain electrode. A patterning of the active layer material of the electrolyte-gated transistor may be achieved by using a direct patterning method during deposition (e.g., by using shadow masks during spray deposition) or by removing parts of an active layer material after deposition by etching (e.g., plasma etching).

Furthermore, by sharing a common gate electrode between the first transistor and the second transistor, the overall number of components can be reduced and the sensor size can be reduced. Moreover, miniaturizing the sensor allows increasing the number of assay types performed, i.e. increasing the number of measuring units, wherein each measuring unit is formed by a source electrode, a drain electrode, and an active layer connecting the source electrode and the drain electrode.

Preferably, the first active layer is functionalized to sense a first chemical and/or biological species and not to sense a second chemical and/or biological species and the second active layer is functionalized to sense the second chemical and/or biological species and not to sense the first chemical and/or biological species.

By functionalizing the active layers, i.e., by making the active layers selective to different chemical and/or biological species, for example by adding a polymeric ion-selective membrane, covalent attachment of biolinker molecules, e.g., DNA strands, protein ligands, enzymes, or nanomaterials, e.g., metal nanoparticles to the active layer, different chemical and/or biological species may be detected using the common gate electrode. Thus, functionalization of an active layer refers to making the active layer interact with a selected chemical and/or biological species so that upon presence of the selected chemical and/or biological species in the fluid a modification of the electrostatic potential of the fluid adjacent the active layer occurs, indicating the upon presence of the selected chemical and/or biological species in the fluid.

Preferably, the first active layer and/or the second active layer comprise carbon nanotubes, a polymer, graphene, Si-nanowires or ZnO-nanoparticles; and/or the first active layer and/or the second active layer preferably comprise an ion-selective membrane layer, a nanomaterial layer, bioreceptors, enzymes, and/or crown ethers.

Nanomaterials such as (randomly distributed) carbon nanotubes, polymers, e.g., P3HT, poly (3-hexylthiophene) or PEDOT, or graphene allow for an intrinsic signal amplification provided by the transistor at the site of detection, thus achieving an enhanced sensitivity for the electrolyte-gated sensor. Additionally, low impedance read-out is possible due to the in-situ signal amplification. This gives rise to the benefit of a much simpler electronic data acquisition system and lowers the production cost of the electrolyte-gated sensor at the same time.

Furthermore, using an ion-selective membrane layer, a nanomaterial layer, bioreceptors, and/or enzymes for functionalization of the first active layer and/or the second active layer enables usage of solution-based technology which allows fabricating the sensor on rigid substrates such as glass as well as flexible substrates such as flexible plastics, textiles, or even paper. This promotes sensor integration using any kind of shape; even a direct integration in a microfluidic system such as a flow pipe system is possible. Moreover, it allows using a scalable active layer deposition technique, e.g., spray-coating, so that large area sensors or sensors with a small sensor feature size can be fabricated on any kind of substrate.

Additionally, several hybrid combinations of various gate electrode/active layer functionalizations can be simultaneously used in the sensor. For example the gate electrode may be covered by nanomaterials such as nanoparticles or graphene and at the same time the active layer may comprise biomarkers to achieve a broader spectrum of sensing possibilities. Also the other case is possible with nanomaterials in or on top of the active layer and biomarkers covering the gate electrode.

The further electrolyte-gated sensor for detecting chemical and/or biological species according to the present invention comprises a substrate, a source electrode formed on the substrate, a drain electrode formed on the substrate, a gate electrode formed on the substrate, and an active layer, the active layer connecting the source electrode and the drain electrode, wherein an electrical resistance of the active layer varies with an electrostatic potential of a fluid when the fluid covers the active layer during operation.

The further electrolyte-gated sensor for detecting chemical and/or biological species according to the present invention further comprises a further gate electrode formed on the substrate, wherein the source electrode, the drain electrode, the active layer and the gate electrode form a first electrolyte-gated transistor and the source electrode, the drain electrode, the active layer and the further gate electrode form a second electrolyte-gated transistor.

As stated above, by forming all components of the first electrolyte-gated transistor and the second electrolyte-gated transistor on one substrate, e.g., on a (planar) surface of one substrate, the present invention takes benefit of the fact that the gate electrode needs not to be positioned above the active layer of an electrolyte-gated transistor but can be positioned at a certain distance from the active layer, as the fluid covering the gate electrode and the active layer acts like a dielectric propagating the gate voltage to the active layer.

Arranging the gate electrode and the electrolyte-gated transistor on the same substrate allows using standard photolithography technique together with a lift-off process or novel techniques like nanotransfer printing or solution-based printing technologies in the fabrication process and thus promotes a cost-effective fabrication process.

For example, the active layer may be deposited using solution-based deposition techniques, e.g., via spin-coating or spray-coating an (aqueous) solution of the active layer material on top of the source electrode, the drain electrode, and a substrate region between the source electrode and the drain electrode. A patterning of the active layer material on the electrolyte-gated transistor may be achieved by using a direct patterning method during deposition (e.g., by using shadow masks during spray deposition) or by removing parts of an active layer after deposition by etching (e.g., plasma etching).

Furthermore, by sharing a common read-out transistor, the overall number of components can be reduced and the sensor size can be reduced. Moreover, miniaturizing the sensor can increase the number of assay types performed.

Preferably, the active layer comprises carbon nanotubes, a polymer, graphene, Si-nanowires or ZnO-nanoparticles and each of the gate electrodes and the further gate electrode is preferably at least in part covered by at least one of an ion-selective membrane layer, a nanomaterial functional layer, bioreceptors, enzymes and crown ethers.

By functionalizing the gate electrodes, i.e., by making each gate electrode selective to specific chemical and/or biological species, different chemical and/or biological species may be detected by the same electrolyte-gated transistor using different gate electrodes. Making the gate electrode selective to specific chemical and/or biological species using the above substances may for example be achieved by coating a gate electrode area with membrane-based functional layers or directly attaching bioreceptors or enzymes to the gate electrode area, e.g., via linking-chemistry or layer-by-layer assembly. Moreover, it is possible to cover the gate-electrode with graphene or nanoparticles to increase the effective surface area and to catalyze the analyte conversion, where the graphene or nanoparticles can also be further covered with bioreceptors or enzymes.

Furthermore, as stated above, nanomaterials such as carbon nanotubes, polymers, e.g., P3HT, poly (3-hexylthiophene) or PEDOT, or graphene allow for an intrinsic signal amplification provided by the transistor at the site of detection, thus achieving an enhanced sensitivity for the electrolyte-gated sensor. Additionally, low impedance read-out from the measuring unit is possible due to the in-situ signal amplification. This gives rise to the benefit of a much simpler electronic data acquisition system and lowers the production cost of the electrolyte-gated sensor at the same time.

Moreover, using an ion-selective membrane layer, a nanomaterial layer, bioreceptors, and/or enzymes for functionalization of the first active layer and/or the second active layer enables usage of solution-based technology which allows fabricating the sensor on rigid as well as flexible substrates. This promotes sensor integration using any kind of shape; even a direct integration in a flow pipe-system is possible. Moreover, it allows using a scalable active layer deposition technique, e.g., spray-coating, so that large area sensors or sensors with a small sensor feature size can be fabricated on any kind of substrate.

Additionally, several hybrid combinations of various gate electrode/active layer functionalizations can be simultaneously used in the sensor. For example the gate electrode may be covered by nanomaterials such as nanoparticles or graphene and at the same time the active layer may comprise biomarkers to achieve a broader spectrum of sensing possibilities. Also the other case is possible with nanomaterials in the active layer and biomarkers covering the gate electrode.

Preferably, the substrate is made of at least one of a rigid material, a flexible material and a biocompatible material.

For example, the substrate may be made of a flexible material such as flexible plastic, paper, or textiles. This allows sensor integration on any kind of shape, even a direct integration in a flow pipe-system. Furthermore, the use of a biocompatible material allows the fabrication of implantable sensors.

Preferably, the electrolyte-gated sensor further comprises a chamber formed on the substrate and is configured to receive a fluid that covers each gate electrode and each active layer, wherein the chamber formed on the substrate preferably forms a channel, e.g., a microfluidic channel.

When the fluid is in contact with more than one gate electrode and/or active layer, detection of different chemical and biological species can be performed (simultaneously) on the same fluid. Furthermore, the sensor can for example be integrated into microfluidic channels or labon-a-chip systems.

Preferably, a method of fabricating the electrolyte-gated sensor comprises the step of depositing the electrodes on the substrate and/or the active layer by photolithography, nanotransfer printing, solution-based printing, or spray-coating.

Using photolithography, nanotransfer printing, solution-based printing, or spray-coating promotes a simple, cost-effective fabrication process that is susceptible for low-cost, large-scale production.

The method of measuring concentrations of multiple species, preferably chemical and/or biological species, in a fluid by a electrolyte-gated transistor array according to the present invention comprises the steps of measuring concentration of a first species in the fluid by using a first electrolyte-gated transistor and measuring a concentration of a second species in the fluid by using a second electrolyte-gated transistor. The first electrolyte-gated transistor and the second electrolyte-gated transistor share a common gate electrode.

As explained above, sharing a common gate electrode by the first electrolyte-gated transistor and the second electrolyte-gated transistor is based on the fact that the gate electrode needs not to be positioned between the source electrode and the drain electrode of each transistor.

This allows for reducing the number of gate electrodes in the electrolyte-gated transistor array. Furthermore, the possibility to arrange the gate electrode and the electrolyte-gated transistors on a same substrate allows using standard photolithography together with a lift-off process or novel techniques like nanotransfer printing or solution-based printing technologies in the fabrication process and thus achieves a simple, cost-effective fabrication process. Preferably, the measuring steps are performed in parallel. Thus, concentration of different species can be measured at the same time which assists in analyzing correlations and promotes a better overview over complex chemical and/or biological processes.

Preferably, a first active layer connects the source electrode and the drain electrode of the first electrolyte-gated transistor, and a second active layer connects the source electrode and the drain electrode of the second electrolyte-gated transistor, wherein each of the first active layer and the second active layer comprises at least one of carbon nanotubes, a polymer, graphene, Si-nanowires and ZnO-nanoparticles.

Nanomaterials such as carbon nanotubes, polymers, e.g., P3HT, poly (3-hexylthiophene) or PEDOT, or graphene allow for an intrinsic signal amplification provided by the transistor at the site of detection, thus achieving an enhanced sensitivity for the electrolyte-gated transistor array. Additionally, low impedance read-out is possible due to the in-situ signal amplification. This gives rise to the benefit of a much simpler electronic data acquisition system and lowers the production cost of the electrolyte-gated transistor array at the same time.

Preferably, each of the first active layer and the second active layer comprises at least one of an ion-selective membrane layer, a nanomaterial layer, bioreceptors, enzymes and crown ethers.

Using at least one of an ion-selective membrane layer, a nanomaterial layer, bioreceptors, and enzymes for functionalization of the first active layer and the second active layer allows using solution-based technology which enables fabricating the array on rigid as well as flexible substrates. This promotes array integration under any kind of shape; even a direct integration in a flow pipe-system is possible. Furthermore, it allows using a scalable active layer deposition technique, e.g., spray-coating, so that large area arrays or arrays with a small array feature size can be fabricated on any kind of substrate. Moreover, miniaturizing the array can increase the number of assay types performed.

The method of consecutively measuring concentrations of multiple species, preferably chemical and/or biological species, in a fluid according to the present invention comprises the steps of measuring concentration of a first species in the fluid by applying a first potential to a first gate electrode of a multi-gate electrolyte-gated transistor and measuring a concentration of a second species in the fluid by applying a second potential to a second gate electrode of the multi-gate electrolyte-gated transistor, wherein the first gate electrode and the second gate electrode comprise or are at least in part covered by different materials.

The term "multi-gate electrolyte-gated transistor" as used throughout the description and claims particularly refers to an electrolyte-gated transistor having one measuring unit and multiple different gates sharing said measuring unit. As explained above, sharing a common measuring unit by different gates is based on the discovery that the gate electrode needs not to be positioned between the source electrode and the drain electrode of the measuring unit.

This allows for reducing the number of electrolyte-gated transistors to one in the electrolyte-gated sensor array. Furthermore, the possibility to arrange the all elements of the electrolyte-gated transistor on a same substrate allows using standard photolithography together with a lift-off process or novel techniques like nanotransfer printing or solution-based printing technologies in the fabrication process and thus achieves a simple, cost-effective fabrication process.

Preferably, each of the first gate electrode and the second gate electrode is at least in part covered by at least one of an ion-selective membrane layer, a nanomaterial layer, bioreceptors, enzymes, and crown ethers.

Covering the gate electrodes by at least one of an ion-selective membrane layer, a nanomaterial layer, bioreceptors, and enzymes for functionalization allows using solution-based technology which enables fabricating the array on rigid as well as flexible substrates. This promotes array integration under any kind of shape; even a direct integration in a flow pipe-system is possible. Furthermore, it allows using a scalable gate coating technique, e.g., spray-coating, so that large area arrays or arrays with a small array feature size can be fabricated on any kind of substrate. Moreover, miniaturizing the array can increase the number of assay types performed.

Preferably, the fluid covers each gate electrode.

Having the fluid simultaneously in contact with several gate electrodes allows that all species measurements are performed on the same fluid, thus promoting comparability of the measurement results.

### BRIEF DESCRIPTION OF THE FIGURES

Further advantages and features of the invention will become apparent from the following description, in which the invention will be described on the basis of exemplary embodiments with reference to the accompanying drawings, in which:
- Fig. 1: is a schematic view of an exemplary embodiment of a electrolyte-gated transistor formed on a substrate;
- Fig. 2: is a schematic view of an exemplary embodiment of a electrolyte-gated sensor with a shared gate electrode;
- Fig. 3: is a schematic view of an exemplary embodiment of a electrolyte-gated sensor with a shared measuring unit.
- Fig. 4: is a schematic view of another exemplary embodiment of a electrolyte-gated sensor with a shared gate electrode; and
- Fig. 5: is a schematic view of another exemplary embodiment of a electrolyte-gated sensor with a shared measuring unit.

### DESCRIPTION OF THE EXEMPLARY EMBODIMENTS

For the purposes of promoting an understanding of the principles of the invention, reference will now be made to the exemplary embodiments illustrated in the drawings and specific language will be used to describe the same. It will, nevertheless, be understood that no limitation of the scope of the invention is thereby intended, such alterations and further modifications in the illustrated device and such further applications of the principles of the invention as illustrated therein being contemplated as would normally occur now or in the future to one skilled in the art to which the invention relates.

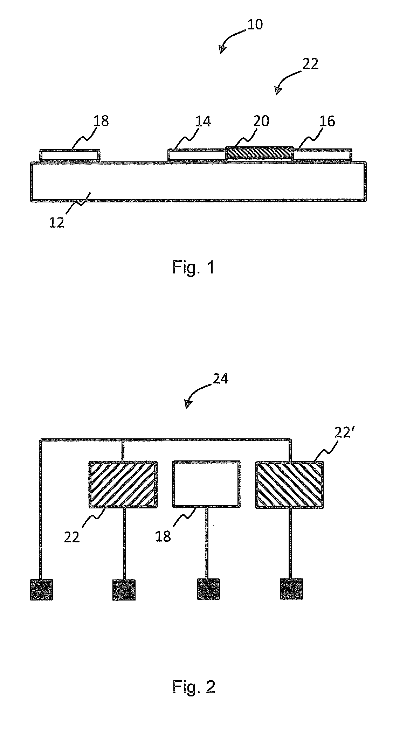

Fig. 1 is a schematic view of an exemplary embodiment of a electrolyte-gated transistor 10 formed on a planar surface of a substrate 12. The electrolyte-gated transistor 10 comprises a source electrode 14, a drain electrode 16, and a gate electrode 18. Each of the electrodes 14, 16, 18 is made of an electrically conductive material for applying a voltage between the source electrode 14 and the drain electrode 16 and for applying an electrostatic potential to the gate electrode 18.

The electrolyte-gated transistor 10 further comprises an active layer 20 connecting the source electrode 14 and the drain electrode 16 which together form measuring unit 22. The active layer 20 is made of a material, whose electrical conductivity gets modified by applying a gate voltage to the gate electrode, wherein the electrical resistance of the active layer 20 varies with an electrostatic potential of a fluid when the fluid covers the active layer 20 during operation.

For example, when the fluid is an electrolyte and the active layer 20 is made of carbon nanotubes, an electrostatic potential at the gate electrode 18 results in an electrostatic potential at the active layer 20 propagated by the electrolyte. Thus, any change in the ionic concentration of the electrolyte can be measured by measuring a current flowing through the active layer 20 as the carbon nanotubes react to the change in the electrostatic potential. Depending on the functionalization of gate electrode and/or active layer, the presence of different chemical and/or biological species may be detected or their concentration may be measured by reading the current signal and comparing the current value with values from a look-up table.

Fig. 2 is a schematic view of an exemplary embodiment of an electrolyte-gated sensor 24 with a shared gate electrode 18. In principle, the electrolyte-gated sensor 24 consists of the substrate 12 on which two measuring units 22, 22' and the gate electrode 18 are formed. The measuring units 22, 22' are formed on opposite sides of the gate electrode 18. Each source electrode 14 of the measuring units 22, 22'is electrically connected with one common contact while each drain electrode 16 of the measuring units 22, 22' is electrically connected to one exclusive contact, the contacts allowing provision of electric power to the measuring units 22, 22'. The gate electrode 18 is electrically connected to one exclusive contact for applying an electrostatic potential to the gate electrode 18.

The measuring units 22, 22' differ in their functionalization, i.e. in their selectivity to chemical and/or biological species that are to be detected by measuring the currents through the measuring units 22, 22'. For example, the first measuring unit 22 may comprise an active layer 20 coated with an ion-selective membrane layer and the second measuring unit 22' may comprise an active layer 20 coated with bioreceptors. Thus, different chemical and/or biological species may be simultaneously detected by the electrolyte-gated sensor 24 by applying an electrostatic potential to the gate electrode 18 and reading out the currents through the measuring units 22, 22'. Although Fig. 2 only shows two measuring units 22, 22', it is clear to the skilled person that the electrolyte-gated sensor 24 may also comprise 3, 6, 12 or more measuring units 22, 22'.

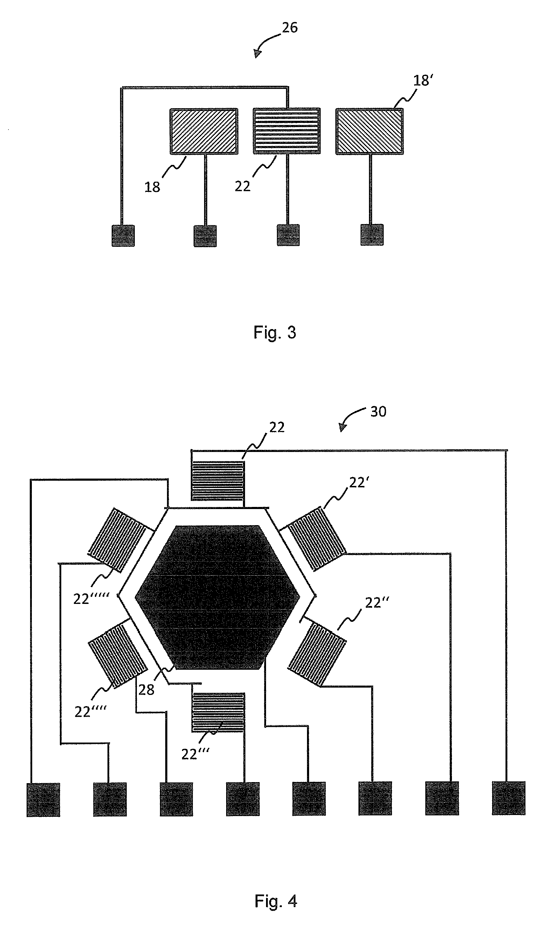

Fig. 3 is a schematic view of an exemplary embodiment of a electrolyte-gated sensor 26 with a shared measuring unit 22. The shared measuring unit is sandwiched between two gate electrodes 18, 18'. Each of the gate electrodes 18, 18' is electrically connected with one exclusive electrical contact for applying an electrostatic potential to each gate electrode 18, 18'. The source electrode 14 and the drain electrode 16 of the measuring unit 22 are each electrically connected to one exclusive contact, the contacts allowing provision of electric power to the measuring units 22. Each gate electrode 18, 18' is electrically connected to one exclusive contact for applying electrostatic potentials to the gate electrodes 18, 18'.

The gate electrodes 18, 18' differ in their functionalization, i.e. in their selectivity to chemical and/or biological species that are to be detected by measuring the currents through the measuring unit 22. For example, the first gate electrode 18 is covered by an ion-selective membrane layer and the second gate electrode 18' is covered by enzymes. When a potential is applied to the first gate electrode 18 a chemical and/or biological species that passes the ion-selective membrane layer may enable measurement of said species. Likewise, when a potential is applied to the second gate electrode 18', a chemical and/or biological species that reacts to the enzymes may be measured. Although Fig. 3 only shows two gate electrodes 18, 18', it is clear to the skilled person that the electrolyte-gated sensor 24 may also comprise 3, 6, 12 or more gate electrodes 18, 18'.

Fig. 4 is a schematic view of another exemplary embodiment of an electrolyte-gated sensor 30 with a shared gate electrode 28. The electrolyte-gated sensor 30 comprises components similar to the electrolyte-gated sensor 24 shown in Fig. 2 but has six measuring units 22-22""' instead of two. Of course, although Fig. 4 shows six measuring units 22-22""', the electrolyte-gated sensor 30 may comprise any number of measuring units 22-22""' with six being one specific example.

Furthermore, as in Fig. 2, for each of the measuring units 22-22""' which are arranged around the shared gate electrode 28 in an equally spaced manner, there is an edge that is parallel to an edge of the shared gate electrode 28. Thus, the arrangement of the measuring units 22-22""' around the shared gate electrode is symmetrical with regard to a symmetry axis through the center of the shared gate electrode 28.

The source electrode 14 of each measuring unit 22-22""' is connected to a common electrical contact, while each drain electrode 14 is connected to a dedicated electrical contact. In an alternative embodiment, the drain electrode 16 of each measuring unit 22-22""' may be connected to a common electrical contact, while each source electrode 12 is connected to a dedicated electrical contact.

It should be clear to someone skilled in the art that Fig. 4 shows but one exemplary embodiment of a possible geometrical layout but the geometry of the layout is not limited to the one shown in Fig. 4 and particularly does not have to be symmetrical. Also, the source and drain electrode geometry can vary from measuring unit 22-22""' to measuring unit 22-22""'.

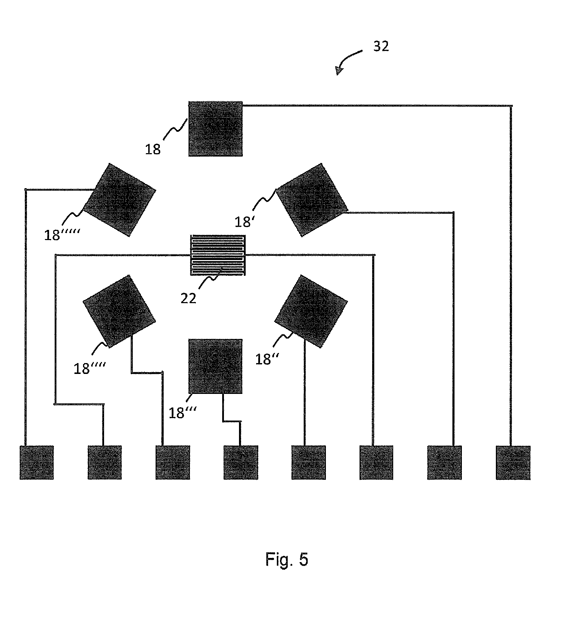

Fig. 5 is a schematic view of another exemplary embodiment of a electrolyte-gated sensor 32 with a shared measuring unit 22. The electrolyte-gated sensor 32 comprises components similar to the electrolyte-gated sensor 26 shown in Fig. 3 but has six gate electrodes 18-18""' instead of two. Of course, although Fig. 5 shows six gate electrodes 18-18""', the electrolyte-gated sensor 32 may comprise any number of gate electrodes 18-18""' with six being one specific example.

Furthermore, the gate electrodes 18-18"'" are arranged around the shared measuring unit 22 in a circular pattern. Thus, the arrangement of the gate electrodes 18-18""' around the shared measuring unit 22 is symmetrical with regard to a symmetry axis through the center of the shared measuring unit 22.

Moreover, each gate electrode 18-18""', the source electrode 12, and the drain electrode 16 of the shared measuring unit 22 is connected to a dedicated electrical contact.

It should be clear to someone skilled in the art that Fig. 5 shows but one exemplary embodiment of a possible geometrical layout but the geometry of the layout is not limited to the one shown in Fig. 5 and particularly does not have to be symmetrical.

Furthermore, it should be clear to the skilled person that several hybrid combinations of various surface functionalizations can be simultaneously used in the sensors 24, 26, 30, 32. For example, the sensors 24, 30 shown in Figs. 2 and 4 can be modified by having the common gate electrodes 18, 28 functionalized by covering the common gate electrodes 18, 28 by at least one of an ion-selective membrane layer, a nanomaterial functional layer, bioreceptors, and enzymes. Likewise, the sensors 26, 32 shown in Figs. 3 and 5 can be modified by having the measuring unit 22 functionalized by covering the active layer 20 by at least one of an ion-selective membrane layer, a nanomaterial functional layer, bioreceptors, and enzymes.

Moreover, the person skilled in the art will appreciate that other combinations like extended gate sensors can also be arranged in a similar fashion.

Finally, it is to be noted by the skilled person that the sensors 24, 26 do not require a reference electrode immersed into the fluid.

### LIST OF REFERENCE SIGNS

- 10: electrolyte-gated transistor
- 12: substrate
- 14: source electrode
- 16: drain electrode
- 18-18""': gate electrodes
- 20: active layer
- 22-22""': measuring units
- 24: electrolyte-gated sensor
- 26: electrolyte-gated sensor
- 28: gate electrode
- 30: electrolyte-gated sensor
- 32: electrolyte-gated sensor

## Claims

1. An electrolyte-gated sensor (24, 30) for detecting chemical and/or biological species comprising:
a substrate (12);
a first source electrode (14) formed on the substrate (12);
a first drain electrode (16) formed on the substrate (12);
a first active layer (20), the first active layer (20) connecting the first source electrode (14) and the first drain electrode (16), wherein an electrical resistance of the first active layer (20) varies with an electrostatic potential of a fluid when the fluid covers the first active layer (20) during operation;
a second source electrode (14) formed on the substrate (12);
a second drain electrode (16) formed on the substrate (12); and
a second active layer (20), the second active layer (20) connecting the second source electrode (14) and the second drain (16) electrode, wherein an electrical resistance of the second active layer (20) varies with an electrostatic potential of the fluid when the fluid covers the second active layer (20) during operation; and
a gate electrode (18, 28) formed on the substrate (12);
wherein the first source electrode (14), the first drain electrode (16), the first active layer (20) and the gate electrode (18, 28) form a first electrolyte-gated transistor (10) and the second source electrode (14), the second drain electrode (16), the second active layer (20) and the gate electrode (18, 28) form a second electrolyte-gated transistor (10).

2. The electrolyte-gated sensor (24, 30) of claim 1, wherein the first active layer (20) is functionalized to sense a first chemical and/or biological species and not to sense a second chemical and/or biological species and the second active layer (20) is functionalized to sense the second chemical and/or biological species and not to sense the first chemical and/or biological species.

3. The electrolyte-gated sensor (24, 30) of claim 1 or 2,
wherein the first active layer (20) and/or the second active layer (20) comprise carbon nanotubes, a polymer, graphene, Si-nanowires or ZnO-nanoparticles; and/or
the first active layer (20) and/or the second active layer (20) preferably comprise:
an ion-selective membrane layer;
a nanomaterial layer;
bioreceptors;
enzymes; and/or
crown ethers.

4. An electrolyte-gated sensor (26, 32) for detecting chemical and/or biological species comprising:
a substrate (12);
a source electrode (14) formed on the substrate (12);
a drain electrode (16) formed on the substrate (12);
a gate electrode (18) formed on the substrate (12);
an active layer (20), the active layer (20) connecting the source electrode(14) and the drain electrode (16), wherein an electrical resistance of the active layer (20) varies with an electrostatic potential of a fluid when the fluid covers the active layer (20) during operation; and
a further gate electrode (18'-18""') formed on the substrate (12),
wherein the source electrode (14), the drain electrode (16), the active layer (20) and the gate electrode (18) form a first electrolyte-gated transistor (10) and the source electrode (14), the drain electrode (16), the active layer (20) and the further gate electrode (18'-18""') form a second electrolyte-gated transistor (10).

5. The electrolyte-gated sensor (26, 32) of claim 4,
wherein the active layer (20) comprises carbon nanotubes, a polymer, graphene, Si-nanowires or ZnO-nanoparticles; and
wherein each of the gate electrode (18) and the further gate electrode (18'-18""') is preferably at least in part covered by at least one of:
an ion-selective membrane layer;
a nanomaterial functional layer;
bioreceptors;
enzymes; and
crown ethers.

6. The electrolyte-gated sensor (26, 32) of claims 1 to 5, wherein the substrate (12) is made of at least one of a rigid material, a flexible material and a biocompatible material.

7. The electrolyte-gated sensor (26, 32) of claims 1 to 6, comprising:
a chamber formed on the substrate (12) and configured to receive a fluid that covers each gate electrode (18- 18""") and each active layer (20);
wherein the chamber formed on the substrate (12) preferably forms a channel, e.g., a microfluidic channel.

8. A method of fabricating the electrolyte-gated sensor (24, 26, 30, 32) of claims 1 to 7, the method comprising the step of:
depositing the electrodes (14, 16, 18, 18') and/or the active layer (20) on the substrate (12) by photolithography, nanotransfer printing, solution-based printing, or spray-coating.

9. A method of measuring concentrations of multiple species, preferably chemical and/or biological species, in a fluid by a electrolyte-gated transistor array, the method comprising the steps of:
measuring a concentration of a first species in the fluid by using a first electrolyte-gated transistor (10); and
measuring a concentration of a second species in the fluid by using a second electrolyte-gated transistor (10);
wherein the first electrolyte-gated transistor (10) and the second electrolyte-gated transistor (10) share a common gate electrode (18, 28).

10. The method of claim 9, wherein the measuring steps are performed in parallel.

11. The method of claim 9 or 10, wherein
a first active layer (20) connects the source electrode (14) and the drain electrode (16) of the first electrolyte-gated transistor (10); and
a second active layer (20) connects the source electrode (14) and the drain electrode (16) of the second electrolyte-gated transistor (10);
wherein each of the first active layer (20) and the second active layer (20) comprises at least one of carbon nanotubes, a polymer, graphene, Si-nanowires and ZnO-nanoparticles.

12. The method of claims 9 to 11, wherein each of the first active layer (20) and the second active layer (20) comprises at least one of:
an ion-selective membrane layer;
a nanomaterial layer;
bioreceptors;
enzymes; and
crown ethers.

13. A method of consecutively measuring concentrations of multiple species, preferably chemical and/or biological species, in a fluid, the method comprising the steps of:
measuring a concentration of a first species in the fluid by applying a first potential to a first gate electrode (18) of a multi-gate electrolyte-gated transistor; and
measuring a concentration of a second species in the fluid by applying a second potential to a second gate electrode (18'-18""') of the multi-gate electrolyte-gated transistor,
wherein the first gate electrode (18) and the second gate electrode (18'-18""') comprise or are at least in part covered by different materials.

14. The method of claim 13, wherein each of the first gate electrode (18) and the second gate electrode (18'-18""') is at least in part covered by at least one of:
an ion-selective membrane layer;
a nanomaterial layer;
bioreceptors;
enzymes; and
crown ethers.

15. The method of claims 9 to 14, wherein the fluid is in contact with each gate electrode (18-18""').
